Europäisches Patentamt

European Patent Office

Office européen des brevets

(11) Publication number: **0 380 726**
**A1**

(12) **EUROPEAN PATENT APPLICATION**

(21) Application number: 89101654.5

(51) Int. Cl.⁵: **C08G 61/12, H01B 1/12**

(22) Date of filing: 31.01.89

(43) Date of publication of application:
08.08.90 Bulletin 90/32

(84) Designated Contracting States:
DE FR GB

(71) Applicant: **ROCKWELL INTERNATIONAL CORPORATION**
**Post Office Box 92098 North American**
**Aircraft Division**
**Los Angeles, CA 90009(US)**

(72) Inventor: **Warren, Leslie F., Jr.**
**3867 Almendro Way**
**Camarillo, CA 93010(US)**
Inventor: **Strauss, Dennis R.**
**2219 Sunridge Drive**
**Ventura, CA 93003(US)**
Inventor: **Raniere, Fred D.**
**8429 Jameson Avenue**
**Northridge, CA 91325(US)**

(74) Representative: **Wagner, Karl H. et al**
**WAGNER & GEYER Patentanwälte**
**Gewürzmühlstrasse 5 Postfach 246**
**D-8000 München 22(DE)**

(54) **Production of polypyrrole gel suitable for casting conductive polypyrrole films.**

(57) Production of polypyrrole gel applicable for casting on an impermeable substrate, such as glass, to form a conductive film thereon, by reaction of a pyrrole with an oxidant/dopant, e.g., ferric or cupric alkylbenzenesulfonate in an aprotic solvent, particularly methylene chloride or 1,2-dichloroethane. Specific examples of such alkylbenzenesulfonates include ferric ethylbenzenesulfonate and cupric dodecylbenzenesulfonate. The viscosity of the gel can be adjusted by solvent addition so that it can be readily applied to a substrate surface, such as glass. Upon subsequent solvent evaporation, a dark coherent textured film of conductive polypyrrole remains on the substrate surface.

EP 0 380 726 A1

# PRODUCTION OF POLYPYRROLE GEL SUITABLE FOR CASTING CONDUCTIVE POLYPYRROLE FILMS

## BACKGROUND OF THE INVENTION

The present invention relates to the production of electrically conductive polypyrrole and is particularly concerned with a process for converting pyrroles to a polypyrrole gel particularly suitable for casting conductive coherent polypyrrole films on impermeable substrates, such as glass, metal and plastic.

Polypyrrole represents one of the most environmentally stable conducting organic polymers. Its usual preparation has involved electrochemical oxidation of pyrroles in various solvents, with films of the conducting materials depositing on the anode. U. S. Patents Nos. 4,552,927 to L. F. Warren and 4,582,575 to L. F. Warren, et al, are illustrative of the production of conductive polypyrrole produced in thicker layers and having improved mechanical properties. such as flexibility, as compared to prior art electrochemically produced polypyrrole films.

Chemically prepared polypyrrole has several distinct advantages over electrochemically prepared polypyrrole. especially concerning its potential use commercially. Thus. chemically prepared polypyrrole is much more amenable to scale-up and commercial plant equipment. It also is considerably easier to apply to a suitable or structural material which would then be used in fabricating an end product.

A chemical process for producing conductive polypyrrole having improved conductivity and thermal stability is disclosed in U. S. -A-4697001 In such application. a liquid pyrrole is treated with a solution of a strong oxidant/dopant, e.g., ferric alkyl or aryl sulfonate. to precipitate a conductive pyrrole polymer. In this process, a porous substrate, such as fiberglass fabric, can be contacted with a solution of a strong oxidant/dopant, e.g., ferric alkyl or aryl sulfonate. then contacting the so-treated substrate with a pyrrole and precipitating a conductive polypyrrole solid comprising a pyrrole polymer cation and sulfonate dopant anion in the pores of such substrate.

While the above procedure has been found suitable for producing conductive polypyrrole on permeable substrates. if such procedure is applied to a non-porous impermeable substrate, such as glass or metal. or if ordinary low viscosity solutions of such oxidant dopant and a pyrrole are used for application to such non-porous impermeable substrates, as by dipping or pouring the solution onto the substrate surface, the resulting precipitated polypyrrole film does not adhere properly to the impermeable surface.

An object of the present invention is the provision of a process for producing electrically conductive polypyrrole having a consistency which renders it castable to form conductive polypyrrole films.

Another object is to provide procedure for producing a relatively high viscosity gel-like polypyrrole mass which can be cast on impermeable substrates, such as glass, to form a coherent conductive polypyrrole film.

Yet another object is to provide a process of the above type using certain oxidant/dopant solutions of certain solvents for reaction with a pyrrole to produce a gel which can be applied readily to a substrate and, upon solvent evaporation, forms a coherent conducting film which is effectively adherent to the substrate.

A still further object is the provision of coherent conductive polypyrrole films on impermeable substrates by the above procedure.

## SUMMARY OF THE INVENTION

The above objects are achieved, according to the invention, and a stable polypyrrole gel obtained, by reaction of a pyrrole monomer with an oxidant/dopant, such as a ferric sulfonate, in an aprotic solvent, such as methylene chloride. The gel can be conveniently applied by dipping a substrate, particularly an impermeable substrate, such as glass or metal. into the gel, or the gel can be poured onto the substrate surface. Upon solvent evaporation, a film of conductive coherent polypyrrole remains on the substrate surface.

More particularly, the process of the invention for producing an electrically conductive polypyrrole film comprises providing a solution of a strong oxidant/dopant selected from the group consisting of ferric and cupric alkylbenzenesulfonates, wherein the alkyl group ranges from 2 to 12 carbon atoms, in an aprotic solvent in which the oxidant/dopant is soluble and in which the oxidant/dopant is capable of converting a pyrrole to a polypyrrole gel, particularly methylene chloride, treating such solution with a pyrrole to oxidize the pyrrole and forming a polypyrrole gel or gel-like mass. The resulting gel can then be applied to a substrate surface, particularly an impermeable substrate, such as glass, by casting the gel onto the substrate surface. Upon drying, a conductive coherent textured polypyrrole film is formed on the substrate.

These and other objects and features of the invention will become apparent from the following detailed description thereof.

## DESCRIPTION OF THE INVENTION AND PREFERRED EMBODIMENTS

The oxidation of pyrrole or a substituted derivative thereof to produce the pyrrole polymer gel according to the invention is carried out in the presence of a strong oxidant and a non-nucleophilic anion functioning as a dopant anion for the pyrrole polymer. The term "strong oxidant" as employed herein is intended to denote an oxidizing substance which is capable of oxidizing pyrrole or a substituted derivative thereof to produce polypyrrole or a pyrrole copolymer. The strong oxidants particularly employed in the invention process are the cations $Fe^{3+}$ and $Cu^{2+}$.

The dopant anions particularly employed in conjunction with the above cations for producing a polypyrrole gel according to the invention are the alkyl benzenesulfonates, wherein the alkyl group ranges from 2 to 12 carbon atoms.

A convenient manner for providing both a strong oxidant and dopant anion is in the form of a salt incorporating both the oxidant cation and the dopant anion as oxidant counterion. Specific examples of oxidant/dopant materials employed in the invention process include ferric ethylbenzenesulfonate, ferric dodecylbenzenesulfonate, cupric ethylbenzenesulfonate, and cupric dodecylbenzenesulfonate.

The above ferric and cupric alkylbenzenesulfonates can be prepared by reacting ferric hydroxide or cupric hydroxide with the appropriate alkylbenzenesulfonic acid having 2 to 12 carbon atoms in the alkyl group, such as ethylbenzenesulfonic acid, to produce the corresponding ferric or cupric alkylbenzenesulfonate, in known manner.

The oxidant/dopant material can also be prepared by reacting ferric or cupric acetate with an alkylbenzenesulfonic acid having 2 to 12 carbon atoms in the alkyl group, to form the corresponding ferric or cupric alkylbenzenesulfonate, in known manner.

The pyrrole monomer to be polymerized, to form a polypyrrole gel by reaction with the oxidant/dopant described above, can comprise neat liquid pyrrole, a C-substituted pyrrole, such as a 3- or 3,4-alkyl or aryl substituted pyrrole, e.g., 3-methylpyrrole, 3,4-dimethylpyrrole, 3-phenylpyrrole or 3-methyl-4-phenylpyrrole, an N-substituted pyrrole, e.g., an N-alkylpyrrole, such as N-methylpyrrole, or an N-arylpyrrole, such as N-phenylpyrrole, or a substituted N-phenylpyrrole, such as nitrophenylpyrrole, to obtain the corresponding pyrrole homopolymer gel. For production of a polypyrrole copolymer gel, a mixture of pyrrole and a C- or an N-substituted derivative of pyrrole, as described above, can be employed. The use of substituted pyrroles generally results in lower conductivity polymers than the parent polypyrrole. Hence, the use of pyrrole is preferred for higher conductivity applications.

It has been found according to the invention that in order to obtain a suitable polypyrrole gel, the reaction between the pyrrole monomer and the ferric or cupric alkylbenzenesulfonate oxidant/dopant should be carried out in an aprotic solvent in which the polypyrrole precipitates in gel form. Solvents of this type found most suitable for purposes of the invention are methylene chloride (dichloromethane) or 1,2-dichloroethane, or mixtures thereof. The particular ferric or cupric alkylbenzenesulfonate employed should be soluble in such aprotic solvents.

The concentration of the oxidant/dopant material in the aprotic solvent solution can range from about 0.01 to about 0.2 molar, preferably .05 molar, to facilitate gel formation of the resulting polypyrrole.

The reaction temperature can be maintained at approximately ambient or room temperature, or at a higher or lower temperatures.

The reaction of the monomer pyrrole with a suitable soluble oxidant/dopant material, e.g., a ferric salt of an alkylbenzenesulfonate as above defined, in an aprotic solvent, e.g., methylene chloride, results in formation of a black gel-like mass or gel/slurry of polypyrrole which is very finely divided and dispersed and cannot readily be filtered. The viscosity of the gel can be adjusted by solvent addition so that the substrate to be coated can be conveniently dipped into the gel/slurry, or such slurry can be conveniently poured onto the substrate surface. Upon subsequent solvent evaporation, a dark film of conductive polypyrrole which has a textured surface remains on the substrate surface.

It has been found that the pyrrole polymer gel produced according to the invention can be readily cast on the surface of impermeable substrates to form an adherent conducting organic film thereon. Such non-porous substrates can include materials, such as glass, metal and plastics, such as polyamides, epoxies, acrylates, polyimides and thermoplastic resins, such as PEEK resin (polyether ether ketones).

The resulting coherent cast film on the impermeable substrate has been found to possess good electrical conductivity with sheet resistivities ranging from about 10 ohms/square to about $10^4$ ohms/square. The term "ohms/square" is defined as the bulk resistivity of the sample in ohms x cm divided by the thickness in cm. Since the method of the present invention utilizes a stable gel/slurry that cannot be filtered, the resulting dried polymer film formed on the substrate has an unusually high surface area which is desirable for various absorption applications and for bonding to resins and other surface coatings.

While both the ferric alkylbenzenesulfonates and the cupric alkylbenzenesulfonates described above result in production of polymeric pyrrole gels, the ferric alkyl benzenesulfonates are more effective in this respect than the corresponding cupric salts.

The following are specific examples of practice of the invention for obtaining polypyrrole gels effective for casting on impermeable substrates to obtain coherent conducting polypyrrole films thereon.

Example 1

Ferric ethylbenzenesulfonate was prepared by reaction of ferric hydroxide with ethylbenzenesulfonic acid, as described in Example I of the above US-A-46 5 7001

A solution of 3 grams ferric ethylbenzenesulfonate in 100 ml methylene chloride was prepared. To this solution was added .61 gram pyrrole. The reaction mixture was stirred at ambient temperature with a stir bar, and in about 1 or 2 minutes a black gel-like mass or mixture was obtained.

The resulting gel-like mass was poured on a glass dish or plate and upon subsequent solvent evaporation, a dark textured coherent film of conductive polypyrrole having a matte finish remained adhered upon the glass surface. Such film had an electrical sheet resistivity of about 300 ohms/square.

Example 2

Cupric dodecylbenzenesulfonate was prepared by mixing 1.9 grams of finely ground $Cu(Ac)_2 \cdot H_2O$ with 6.0 grams of neat dodecylbenzenesulfonic acid and warming for about 30 minutes at 60° C.

Methylene chloride was then added to the resulting reaction mixture containing cupric dodecylbenzenesulfonate, in an amount to form 200 ml of a solution-suspension containing about 6.6 grams of the cupric sulfonate salt.

To the resulting solution was added 1 gram of pyrrole, and the reaction mixture turned black upon prolonged stirring with a magnetic stir bar. Reduction of the amount of solvent to about 75 ml by solvent evaporation left a black polypyrrole gel.

The resulting polypyrrole gel was applied to a glass slide to form a coherent conductive polypyrrole film thereon.

Example 3

In this example, pyrrole was polymerized in several solvents to determine if it would form gels in solvents other than the methylene chloride of Examples 1 and 2. Such other solvents included acetone, ethyl acetate, acetonitrile, 2-propanol and 1,2-dichloroethane.

In these tests, all solutions were made up using .3 gram ferric ethylbenzenesulfonate in 10 ml of the solvent (0.049 M) to which 4 drops of pyrrole were added while the solution was stirred. The reaction was carried out using each of the above individual solvents.

The results on polypyrrole gel formation are noted below:

Acetone: the product did not gel.

Ethyl acetate: The ferric ethylbenzenesulfonate did not dissolve. There was no reaction.

Acetonitrile: The product did not gel.

2-Propanol: The product did not gel.

1,2-dichloroethane: The product gelled within a few seconds. Ferric ethylbenzenesulfonate is not as soluble in this solvent as it is in $CH_2Cl_2$; thus, the product did not seem to be as thick as can be attained in $CH_2Cl_2$.

It is accordingly seen from Examples 1 - 3 above that of the solvents tried, only the aprotic solvents methylene chloride and 1,2-dichloroethane were found effective in producing polypyrrole gels by polymerization of pyrrole with ferric and cupric alkylbenzenesulfonates, as defined above.

The conductive polypyrrole films which can be cast upon substrates from polypyrrole gels produced according to the invention process are applicable in the production of printed electronic circuitry and semi-conductor components, in antistatic applications, in electromagnetic interference shielding applications, in highly absorbing optical coatings and conductive paint. The films so produced render the substrates containing such films amenable to printing, silk-screening and lithographic processing.

From the foregoing, it is seen that the present invention provides improved procedure for casting or coating polypyrrole in the form of a gel on impermeable substrates and providing electrically conductive polypyrrole films on such impermeable substrates, to produce materials having a wide range of utility.

Since various changes and modifications will occur to and can be made readily by those skilled in the art without departing from the invention concept, the invention is not to be taken as limited except by the scope of the appended claims.

The process of the invention for producing an electrically conductive polypyrrole film comprises providing a solution of a strong oxidant/dopant selected from the group consisting of ferric and cupric alkylbenzenesulfonates, wherein the alkyl group ranges from 2 to 12 carbon atoms, in an aprotic solvent in which the oxidant/dopant is soluble and in which the oxidant/dopant is capable of converting a pyrrole to a polypyrrole gel, particularly methylene chloride, treating such solution with a pyrrole to oxidize the pyrrole and forming a polypyrrole gel or gel-like mass. The resulting gel can then be applied to a substrate surface, particularly an impermeable substrate, such as glass, by casting the gel onto the substrate surface. Upon drying, a conductive coherent textured polypyrrole film is formed on the substrate.

US patent No. 4,697,001, is directed to a process for producing electrically conductive polypyrrole by reacting liquid pyrrole with an oxidant/dopant, such as ferric ethylbenzenesulfonate. In column 3, lines 59 - 68, the patent discloses various solvents for carrying out the reaction. Among the solvents disclosed is methylene chloride. The concentration of oxidant/dopant in the solvent solution can range from about 0.001 to about 2 molar. See column 4, lines 6 - 11, of the patent. No specific examples are given in the patent employing methylene chloride as solvent. In column 6, the paragraph commencing at line 25, the low viscosity solutions of pyrrole and oxidant/dopant of the patent are applied to porous substrates, such as fiberglass fabric.

There is no teaching or recognition in US-A-4697001 , that pyrrole can be reacted with an oxidant/dopant, such as ferric ethylbenzenesulfonate, in an aprotic solvent, such as methylene chloride, employed in a low range of concentration of the oxidant/dopant material ranging from about 0.01 to about 0.2 molar, preferably .05 molar, to facilitate gel formation of the resulting polypyrrole, as disclosed in the paragraph bridging pages 10 and 11 of the specification, and resulting in a polypyrrole gel which can be applied to a non-porous impermeable substrate, such as glass or metal, and which upon solvent evaporation forms a coherent film of conductive polypyrrole. The "methylene chloride" solvent disclosure of US-A-4697001 is only in the nature of an incidental disclosure, which fails to recognize or teach the invention of the claims of the present application.

The process of the invention for producing an electrically conductive polypyrrole film comprises providing a solution of a strong oxidant/dopant selected from the group consisting of ferric and cupric alkylbenzenesulfonates, wherein the alkyl group ranges from 2 to 12 carbon atoms, in an aprotic solvent in which the oxidant/dopant is soluble and in which the oxidant/dopant is capable of converting a pyrrole to a polypyrrole gel, particularly methylene chloride or 1,2-dichloroethane, and in a concentration of oxidant/dopant ranging from about 0.01 to about 0.2 molar, treating such solution with a pyrrole to oxidize the pyrrole and forming a polypyrrole gel or gel-like mass. The resulting gel can then be applied to a substrate surface, particularly an impermeable substrate, such as glass, by casting the gel onto the substrate surface. Upon drying, a conductive coherent textured polypyrrole film is formed on the substrate.

US patent, No. 4,697,001 (Walker), of which the present application is a continuation-in-part, is directed to a process for producing electrically conductive polypyrrole by reacting liquid pyrrole with an oxidant/dopant, such as ferric ethylbenzenesulfonate. In column 3, lines 59 - 68, the patent discloses various solvents for carrying out the reaction. Among the solvents disclosed is methylene chloride. The concentration of oxidant/dopant in the solvent solution can range from about 0.001 to about 2 molar. See column 4, lines 6 - 11, of the patent. No specific examples are given in the patent employing methylene chloride as solvent. In column 6, the paragraph commencing at line 25, the low viscosity solutions of pyrrole and oxidant/dopant of the patent are applied to porous substrates, such as fiberglass fabric.

There is not teaching or recognition in US-A-4697001 , that pyrrole can be reacted with an oxidant/dopant, such as ferric ethylbenzenesulfonate, in an aprotic solvent, such as methylene chloride, employed in a low range of concentration of the oxidant/dopant material ranging from about 0.01 to about 0.2 molar, preferably .05 molar, as now defined in the claims, to facilitate gel formation of the resulting polypyrrole, as disclosed in the paragraph bridging pages 10 and 11 of the specification, and resulting in a polypyrrole gel which can be applied to a non-porous impermeable substrate, such as glass or metal, and which upon solvent evaporation forms a coherent film of conductive polypyrrole.

It should be noted that Applicants' gel-forming aprotic solvents, methylene chloride and 1,2-dichloroethane, called for in the claims, are a special type of non-oxygen and non-nitrogen-containing aprotic solvents.

It is noted that the working examples of the Walker disclosure use water as a reaction medium. However, water is only used in the examples, such as Examples I, III and IV, in the preparation of the oxidant/dopant, such as ferric ethylbenzenesulfonate, and the reaction of pyrrole with the oxidant/dopant, as in examples IB, IIB, IIB, and IVB, takes place in methanol as solvent.

As previously noted, while Walker, et al discloses, among other solvents, methylene chloride for carrying out the reaction, it is submitted that it would be unobvious from the disclosure of Walker, et al, that when choosing methylene chloride or 1,2-dichloroethane aprotic solvents as reaction medium for the reaction of a pyrrole with a strong oxidant/dopant, such as ferric ethylbenzenesulfonate, under conditions such as the use of certain low ranges of concentration of oxidant/dopant as noted above and called for in the claims, the result is a polypyrrole gel of sufficient viscosity so that it can be cast or coated onto an impermeable substrate to provide an electrically conductive coherent polypyrrole film thereon.

## Claims

1. A process for producing a polypyrrole gel which comprises:
providing a solution of a strong oxidant/dopant selected from the group consisting of ferric and cupric alkylbenzenesulfonates, wherein the alkyl group ranges from 2 to 12 carbon atoms, in an aprotic solvent in which said oxidant/dopant is soluble and in which said oxidant/dopant is capable of converting a pyrrole to a polypyrrole gel,
treating said solution with a pyrrole to oxidize said pyrrole, and
forming a polypyrrole gel.

2. The process of claim 1, wherein said aprotic solvent is selected from the group consisting of methylene chloride and 1,2-dichloroethane, and mixtures thereof.

3. The process of claim 1 or 2, wherein said oxidant/dopant is selected from the group consisting of ferric ethylbenezenesulfate and ferric dodecylbenzenesulfonate.

4. The process of any of claims 1-3, wherein said oxidant/dopant is selected from the group consisting of cupric ethylbenzenesulfonate and cupric dodecylbenzenesulfonate.

5. The process of any of claims 1-4, wherein said oxidant/dopant is ferric ethylbenzenesulfonate and said aprotic solvent is methylene chloride, the concentration of said oxidant/dopant in said solvent ranging from about 0.01 to about 0.2 molar.

6. The process of any of claims 1-5, said pyrrole selected from the group consisting of pyrrole, a 3- and 3,4-alkyl and aryl C-substituted pyrrole, an N-alkylpyrrole and an N-arylpyrrole.

7. A process for coating an impermeable substrate with a conductive polypyrrole film which comprises:
providing a solution of a strong oxidant/dopant selected from the group consisting of ferric and cupric alkylbenzene-sulfonates, wherein the alkyl group ranges from 2 to 12 carbon atoms, in an aprotic solvent in which said oxidant/dopant is soluble and in which said oxidant/dopant is capable of converting a pyrrole to a polypyrrole gel,
treating said solution with a pyrrole to oxidize said pyrrole,
forming a polypyrrole gel,
applying said polypyrrole gel to an impermeable substrate, and
evaporating said solvent and forming a conductive textured film of polypyrrole on said substrate.

8. The process of claim 7, said substrate selected from the group consisting of glass, metal and plastic.

9. The process of claim 7 or 8, wherein said oxidant/dopant is cupric dodecylbenzenesulfonate and said aprotic solvent is methylene chloride, the concentration of said oxidant/dopant in said solvent ranging from about 0.01 to about 0.2 molar.

10. An impermeable substrate containing a film of conductive polypyrrole, produced by the process of claim 12.

11. A process for producing a polypyrrole gel particularly adapted for coating on an impermeable substrate to form a conductive coherent polypyrrole film, which comprises:
providing a solution of a strong oxidant/dopant selected from the group consisting of ferric and cupric alkylbenzenesulfonates, wherein the alkyl group ranges from 2 to 12 carbon atoms, in an aprotic solvent in which said oxidant/dopant is soluble and in which said oxidant/dopant is present in a concentration ranging from about 0.01 to about 0.2 molar and is capable of converting a pyrrole to a polypyrrole gel, said aprotic solvent being selected from the group consisting of methylene chloride and 1,2-dichloroethane, and mixtures thereof,
treating said solution with a pyrrole to oxidize said pyrrole, and
forming a polypyrrole gel.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 11, no. 317 (C-452)[2764], 15th October 1987; & JP-A-62 106 923 (MITSUI TOATSU CHEM. INC.) 18-05-1987 * Abstract * ----- | 1 | C 08 G 61/12 H 01 B 1/12 |

|  |  |  | TECHNICAL FIELDS SEARCHED (Int. Cl.5) |
|---|---|---|---|
|  |  |  | C 08 G |

The present search report has been drawn up for all claims

| Place of search | Date of completion of the search | Examiner |
|---|---|---|
| THE HAGUE | 25-10-1989 | STIENON P.M.E. |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
...............................................................
& : member of the same patent family, corresponding
  document

EPO FORM 1503 03.82 (P0401)